# EUROPEAN PATENT APPLICATION

(11) **EP 0 787 548 A1**
(43) Date of publication of application: **06.08.1997**
(21) Application number: 97200215.8
(22) Date of filing: 28.01.1997
(51) Int. Cl.: B23B 13/04, B23B 13/12

(54) **Rod centering device for an automatic lathe feeder**

(30) Priority: 02.02.1996 IT MI960080 U
(71) Applicant: PIETRO CUCCHI S.p.A., 20060 Bussero (Milano) (IT)
(72) Inventor: Cucchi, Pietro, 20060 Bussero (Milano) (IT)
(74) Representative: Faraggiana, Vittorio, Dr. Ing.

(57) **Abstract**

A centering device (10) for rods fed to a lathe is designed to be arranged between a rod feeder outlet and a lathe inlet. The device comprises at least one centerer (11) with a passage (22) therein to be run through by a rod to which it supplies lateral containment. The centerer (11) comprises on itself controllable means (29,30) for widening or narrowing the passage. There are also present operating means (23) which engage on command the controllable widening and narrowing means to change the centerer between a widened and a narrow passage condition.

## Description

In feeders which feed rods to automatic lathes the problem of minimizing vibrations caused by high-speed rotation of the rod is strongly felt. These vibrations are caused by the lack of linearity of the rod, which causes beating of the rod inside the guide channel in the magazine. In addition to increasing the noise level of the lathe station the vibrations affect machining precision and cause abnormal wear of the various moving parts and, if the amplitude is very high, can obstruct or even stop rod feeding in the lathe chuck.

It has been found advantageous to provide centering devices arranged immediately upstream of the chuck and confining the rod laterally to bring it back to satisfactory linearity near the chuck. The rod must not be closely constrained. Indeed, especially in the case of large misalignments, it has been found that this prevents discharge of the vibrations inside the magazine guide with resulting generation of harmful stresses in the chuck which affect the soundness of the chuck bearings and moving parts.

In short it has been found advantageous that the rotating rod be supported at three points: firmly at the two ends, at the rear by means of the magazine grasping collet and at the front by means of the lathe chuck, and at the chuck inlet (i.e. the magazine outlet) by means of a centerer supplying a lateral confinement with appropriate play. The difficulty with embodiment of such a device is due to various reasons. For example, the lateral confinement must have a predetermined play which must be adjustable with the diameter of the rod. In addition, the centerer must permit passage of the rear magazine collet, which pushes the rod into the chuck and withdraws the final end after rod machining completion.

For multichuck lathe magazines the problems with embodiments are increased by the fact that in the magazine are present simultaneously various rods which must be able to move between the different lathe machining positions with each rod having its own centerer. Because of the turret rotation of the rods and the quite small spaces available, it becomes difficult to produce centerers with controlled moving parts and especially if it is desired to hold production costs and structural complexity within acceptable limits.

The general purpose of the present invention is to obviate the above mentioned shortcomings by supplying a centering unit or device which would permit perfect centering of rods fed to a lathe without obstructing magazine operation and which would have a simple, robust structure even in case of multiple embodiment for use in a magazine for multichuck lathes.

In view of this purpose it was sought to provide in accordance with the present invention a lathe rod centering device to be arranged between the outlet of a rod feeder and the inlet of a lathe and comprising at least one centerer with a passage in it to be traversed in a sliding manner by a rod while affording it lateral containment and characterized in that the centerer comprises within it controllable passage widening and narrowing control means with there being present operating means which engage the controllable widening and narrowing means upon command to change the centerer between a widened passage condition and a narrow passage condition. To clarify the explanation of the innovative principles of the present invention and its advantages compared with the prior art there is described below with the aid of the annexed drawings a possible embodiment thereof by way of non-limiting example applying said principles. In the drawings:
Fig. 1 shows a front view of a multiple centering unit provided in accordance with the present invention,
Fig. 2 shows a front view of a centerer of the unit of Fig. 1 partially cross-section along plane of cut II-II of Fig. 3 and in open or non-operating position,
Fig. 3 shows a side view of the centerer of Fig. 1 partially cross-section along the general plane of cut III-III of Fig. 2,
Fig. 4 shows a front view of the centerer of Fig. 2 in a closed or operating position,
Fig. 5 shows a front view of the centerer as in Fig. 4 but viewed from the opposite or rear face, and
Fig. 6 shows a diagrammatic side view of a magazine assembly, centerer and multichuck lathe.

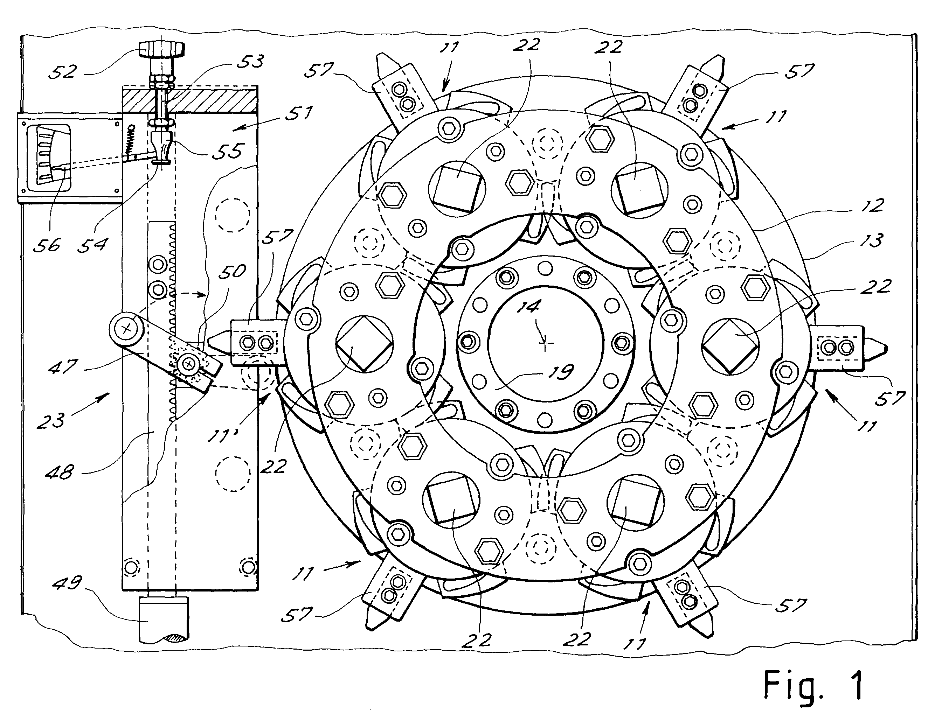

With reference to the Figures in Fig. 1 there is shown a front view (i.e. viewed from side where the rods emerge from a feeder towards a lathe) of a centering device or unit indicated as a whole by reference number 10. The centering unit 10 comprises as many centerers 11 as there are rods simultaneously feedable to the lathe. For example, in Fig. 1 is shown a centering unit suited for a 6-position multichuck lathe.

The centerers 11 are supported by a rotating frame made up of mutually integral supporting plates 12, 13. Each centerer is mounted to have its own central passage 22 aligned with the feed axis of a rod between the feeder and the lathe. In the case of a multichuck lathe the supporting plates 12 and 13 rotate around a central axis 14 to permit the centerers to follow the rotating movement of the magazine and the lathe chuck with each centerer remaining axially aligned with the corresponding rod sliding guide in the feeder. Rotation of the centerer around the axis 14 can be controlled by means (not shown) purposely provided or can be more simply provided by means of passive dragging of the rotating centerer assembly hooked to the normal rotation means present on the feeder. For example, there can be provided a collar 19 integral with the rear plate 13 and bolted to the rotation axis of the feeder.

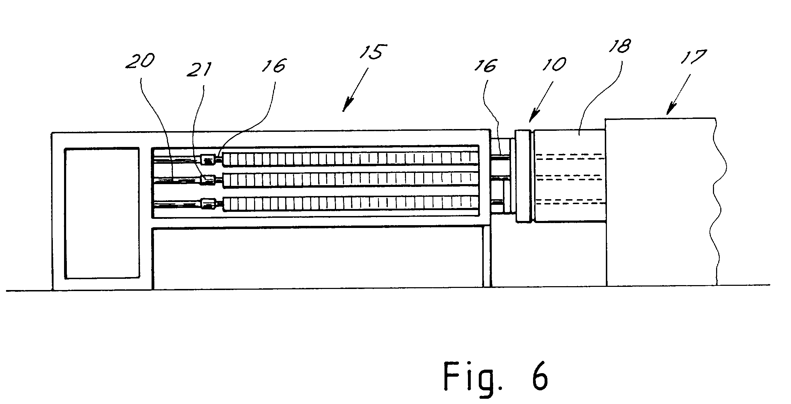

Fig. 6 shows diagrammatically a feeder 15 which through a centerer 10 arranged immediately upstream of the lathe feeds rods 16 to a lathe 17 having a multiple chuck 18.

The feeder comprises in addition a pusher 20 with a collet 21 for grasping a rear end of a rod when the latter is in a radial position of advancing or retraction.

Both the magazine and the lathe are prior art and therefore easily imaginable by one skilled in the art. They are accordingly not shown nor further described. During their rotation the centerers are taken sequentially to a position 11' which corresponds to the advance or retract position of a rod between the feeder and the lathe. The centering unit comprises control means 23 for opening and closing the centerer in this position as clarified below.

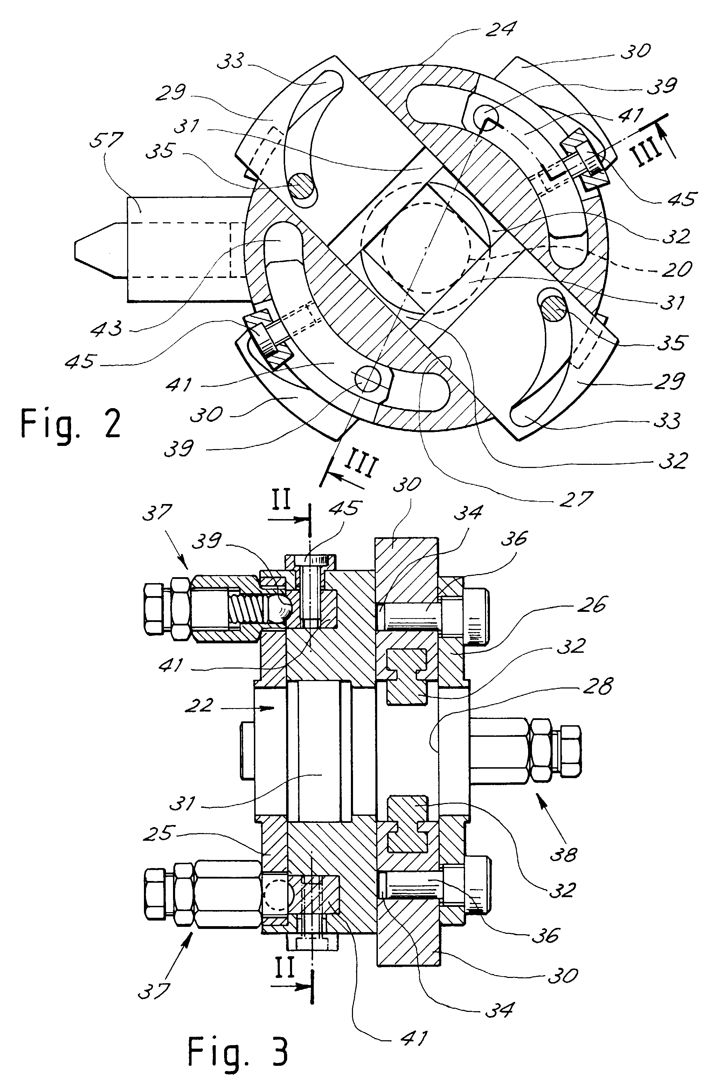

As shown in Figures 2 and 3 each centerer 11 comprises a central body 24 which rotates with relative motion between two covers 25, 26 in accordance with an axis coinciding with the axis of the passage 22. For example, the two covers can be integral with the supporting plates 12 and 13.

In the body 24 are present diametrical seats 27, 28 arranged at right angles with respect to each other and open on the opposite faces of the body facing the covers 25, 26.

In each seat 27, 28 run from opposite sides of the central passage 22 slides 29, 30 which are arranged in crossed and paired position. The pairs of slides 29 and the pair of slides 30 are spaced apart along the axis of the passage 22 as may be seen in Fig. 3.

The slides of each pair have one edge directed towards the axis of the passage 22 which faces on a corresponding edge of the other slide of the pair. Advantageously these edges are embodied with an insert 31, 32 of a material having high wear resistance and low friction such as for example Hytral (™).

As may be seen in Fig. 2, the edges 31, 32 embody confining edges for the rod, defining a passage which has advantageously a virtually square plan. In addition, the two pairs of facing edges are mutually offset along the axis of the passage so as to supply a rest for the rod on two spaced points (e.g. 60-70mm). This together with a passage with a square shape was found advantageous for supplying an effective realignment function for the rod inserted in the centerer.

Each slide 29, 30 has a slot, respectively 33, 34, shaped as an arc of a circle to embody a cam surface. In the slots 33, 34 run respective pins 35, 36 which are integrally supported by the covers constituting supporting elements for the pins. In this manner, upon rotation of the central body 24 with respect to the covers, the slides 29, 30 run linearly in their seats, drawing together and apart synchronously to narrow or widen the square passage.

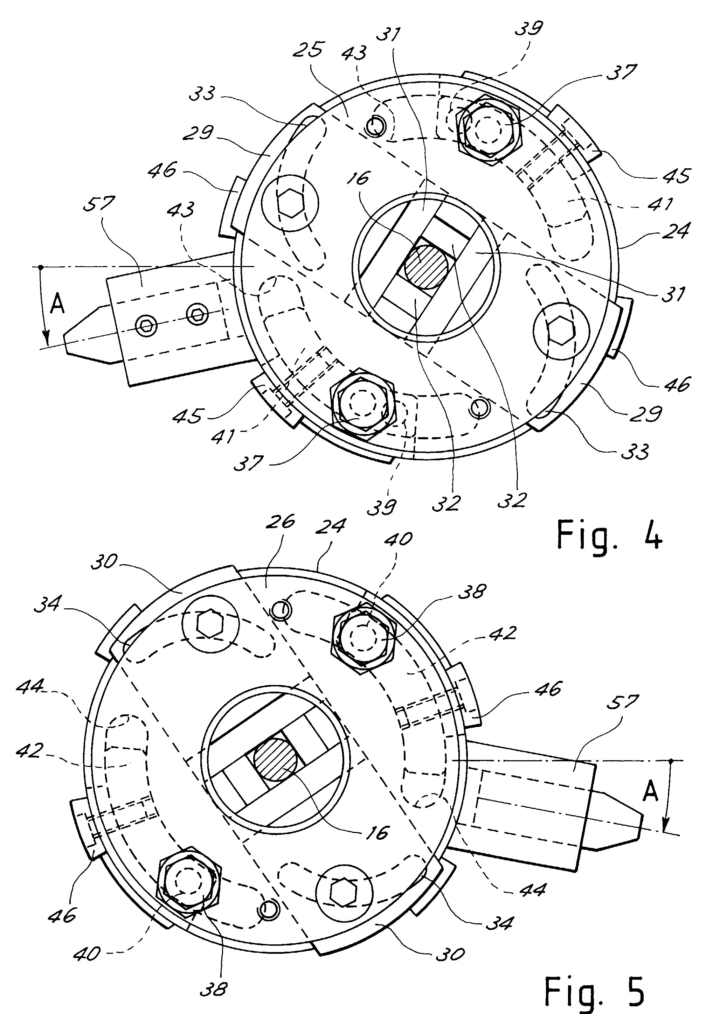

Fig. 2 shows for example a widened position and Figures 4 and 5 show a narrow position created by rotation in an angle A of the body with respect to the covers starting from the position of Fig. 2. Through the centerer can thus pass the pusher 20 (shown in broken lines in Fig. 2) or it can contain a smaller diameter rod (Figures 4 and 5).

To permanently hold the open and closed position of the centerer, the covers support ball couplings 37, 38 which, depending on the angular position between the covers and the central body, engage a spring loaded ball in respective seats 39 or 40 which are present in the central body 24 in appropriate positions. The thrust of the spring must be sufficient to prevent movement of the slides under the thrust of the rod rotating between them.

Specifically the couplings 37 on a cover engage in the respective seats 39 when the centerer is in the open or free passage position while the couplings 38 on the other cover engage in the respective seats 40 when the centerer is in the closed or containment position.

Advantageously the seats 39 and 40 are made in keys 41, 42 which slide in purposeful cavities 43, 44 extending in a circumferential direction in the central body 24, and which can be locked in position by means of screws 45, 46. In this manner, the position of the seats 39, 40 is angularly adjustable in the central body and the steady angular opening and closing positions are thus adjustable depending on the diameter of the rod and pusher. Returning to Fig. 1, to obtain sequential operation of the centers, each center has operating means made up of an operating arm 57 projecting radially from the central body. The control means 23 comprise coupling means which couple the operating means to operate the centerer when the centerer is in position 11'. For example, the operating means can comprise a corresponding operating arm 47 which engages upon command the operating arm of the centerer in the position 11' to rotate the central body 24 of the centerer toward the open or closed position. The travel of the operating arm is advantageously adjustable to rotate the operating arm only in the angle necessary to cause engagement of the couplings 37 and 38, which are adjusted for the desired angular position. In Fig. 1 is shown an embodiment of the operating means in which the means comprise a rack 48 moved by a double-action piston 49 to engage a pinion gear 50 supporting integrally the operating arm 47. In Fig. 1 the operating arm is shown in broken lines in the centerer opening position while it is shown in solid lines in an intermediate travel position.

In the example shown, the position of the operating lever corresponding to the opening of the centerer is adjustable by changing the phase of the arm 47 on the pinion gear 50. As the opening position depends on the pusher diameter, which usually does not change while the machine is in use, this adjustment (together with the adjustment of the key corresponding to the open position) is generally to be done once for all upon assembly of the machine. The position of the centerer thrust arm 47 in its closed or containment position is to be adjusted with the change in the rod diameter, which occurs rather frequently. There is accordingly present a control 51 for adjustment of the travel of the rack to the closed centerer position. This control consists of a knob 52 for adjusting inward or outward a screw 53 arranged axially to the travel of the rack to form with one of its ends a striker 54 to act as a stop against running of the rack towards the closed position of the centerer. Advantageously the screw supports a cam elemento 55 for control of an index 56 for visual indication of the stop position. When using the machine, initially the phase of the arm 47 is adjusted and the keys 40 of the centerer are locked in the corresponding positions to secure the desired open position. Then with each change in the type of rod fed, the stop 51 is adjusted for the diameter of the rod to be machined and the play it is desired to keep between the rod and the containment edges of the centerer when the centerer is in the closed position. The keys are then adjusted accordingly. This can be done for example by moving the centerer to be adjusted to the position 11', detaching the lock of the keys 41, operating the piston to bring the arm 47 into the closed position, rotating the keys 41 until they engage in the respective engagements to lock them in the position reached.

During operation of the lathe station the piston 49 is operated to open the centerer in the position 11, the rod is loaded by the feeder through the centerer and the piston is operated to close the centerer. The lathe chuck, the magazine and the centering device rotate synchronously so as to move the end of the rod to the various machining positions. When the rod returns to the position 11' the pusher is advanced to bring a new section of the rod into the lathe and the machining cycle is repeated. When during the rod feeding cycles the rod becomes so short that its insertion into the lathe requires passage of the pusher through the centerer, the centerer is again opened by operation of the piston. Since the rod is now short and the distance between its front end supported by the chuck and its rear end supported by the pusher is short, there is no need for its lateral containment.

It is now clear that the preset purposes have been reached to supply a simple and reliable centering device. The absence of a connection between each centerer and the operating means permits obtaining a very simple device and prevents any dragging problems.

Naturally the above description of an embodiment applying the innovative principles of the present invention is given merely by way of example and therefore is not to be taken as a limitation of the patent right claimed here. For example, as mentioned above, only the relative movement of the covers and the body is important. It would accordingly be possible to provide a centerer with a central body fixed to the structure and a control lever projecting from the covers which are made mutually integral. In addition, the number of centerers depends on the specific requirements. In particular, in the case of single-chuck lathes a device with a single centerer in accordance with the present invention could be used.

## Claims

1. Centering device (10) for rods fed to a lathe and designed to be arranged between the outlet of a rod feeder and the inlet of a lathe and comprising at least one centerer (11) having a passage (22) in it to be traversed in a running manner by a rod to which it provides lateral containment and characterized in that the centerer (11) comprises on it controllable means (29,30) for widening or narrowing the passage with there being present operating means (23) which engage on command the widening and narrowing controllable means for commanding the centerer between a widened passage condition and a narrow passage position.

2. Centering device in accordance with claim 1 and characterized in that the centerer comprises a body (24) in which is formed the passage (22) and containing seats (27,28) in which slides (29,30) run radially in the passage (22) with each slide (29,30) comprising on it a cavity (33,34) in which runs a pin cam (35,36) supported by a support elemento (25,26) rotatable around the body (24) and upon relative rotation between the body (24) and the supporting element (25,26) the movement of the pin (35,36) in the cavity (33,34) causing radial translation of the respective slide (29,30) in its seat (27,28) to form the passage widening and narrowing control means.

3. Centering device in accordance with claim 2 and characterized in that the controllable means comprise a control arm (57) projecting from the centerer for relative rotation between the body (24) and the supporting element (25,26) with the operating means comprising an operating arm (47) which engages upon command the control arm (57) of the centerer to command said relative rotation.

4. Centering device in accordance with claim 3 and characterized in that the slides (29,30) are four in number arranged in crossed facing pairs.

5. Centering device in accordance with claim 4 and characterized in that the two pairs of slides are spaced axially from each other along the passage (22).

6. Centering device in accordance with claim 4 and characterized in that in each pair each slide (29 or 30) has a rectilinear edge (31 or 32) turned toward the other slide to form a pair of parallel lateral containment edges for a rod inserted in the passage (22).

7. Centering device in accordance with claim 6 and characterized in that the containment edges (31,32) define a passage with a square cross section for the rod.

8. Centering device in accordance with claim 3 and characterized in that the supporting elemento is made up of covers (25,26) arranged on opposite sides of the body to laterally close the slide seats of the slides to permit at the same time rotation of the body therein.

9. Centering device in accordance with claim 8 and characterized in that the covers (25,26) support ball couplings (37,38) which engage in seats (39,40) in the body to identify mutual angular positions of body and covers corresponding to predetermined openings of the centerer passage.

10. Centering device in accordance with claim 9 and characterized in that the seats (39,40) are made in keys (41,42) which can be clamped in predetermined angular positions on the body.

11. Centering device in accordance with claim 1 and characterized in that it comprises a plurality of centerers (11) supported on a frame (12,13) arranged in a circle and with its own passages (22) parallel with each other and with the frame being rotatable to sequentially bring the centerers into a succession of positions and with there being present in at least one (11') of said positions operating means (23) for engaging upon command and operating the controllable widening and narrowing means for a centerer reaching this position (11').

12. Centering device in accordance with claims 3 and 11 and characterized in that the control arm (57) of each centerer is directed radially to the circle of the plurality of centerers and the operating arm (47) is rotating to meet and move the operating arm of the centerer which is in said at least one position (11').

13. Centering device in accordance with claim 12 and characterized in that the operating arm (47) is moved by a pair of pinion gears (50) and a rack (48) with the rack (48) being moved by a piston (49).

14. Centering device in accordance with claim 13 and characterized in that it comprises stop means (51) adjustable at least for the travel of the centerer controlling rack (48) to the narrow passage position.
